# EUROPÄISCHE PATENTANMELDUNG

(11) **EP 0 816 432 A2**
(43) Veröffentlichungstag der Anmeldung: **07.01.1998**
(21) Anmeldenummer: 97201952.5
(22) Anmeldetag: 26.06.1997
(51) Int. Cl.: C08L 67/06

(54) **Härtbare Polyesterharz-Formmassen**

(30) Priorität: 02.07.1996 DE 19626545
(71) Anmelder: DSM RESINS B.V., 8022 AW Zwolle (NL)
(72) Erfinder: Georg, Gerhard, 67069 Ludwigshafen (DE); Buhl, Dieter, 67227 Frankenthal (DE); Lorenz, Reinhard, 67117 Limburgerhof (DE); Ittemann, Peter, 68623 Lampertheim (DE); Schäfer, Harald, 8021 AJ Zwolle (NL)
(74) Vertreter: Dorrestijn, Antoon

(57) **Zusammenfassung**

Die Anmeldung betrifft SMC- bzw. BMC-Massen auf Basis eines ungesättigten Polyesters aus Maleinsäureanhydrid, Dicyclopentadien und Diethylenglykol.

## Beschreibung

Die Erfindung betrifft härtbare Polyesterharz-Formmassen auf Basis von Diethylenglykol als Diolkomponente mit guter Styrolverträglichkeit, die zu Formteilen mit hohem Glanz aushärtbar sind.

SMC-Formmassen aus ungesättigten Polyesterharzen mit Zusätzen von Verstärkungsfasern und Füllstoffen ergeben nach der Härtung Form-Teile mit hoher Festigkeit, Wärmeformbeständigkeit und Lösungsmittelbeständigkeit. Sie haben daher zur Herstellung von Konstruktionswerkstoffen eine große Bedeutung erlangt. Ein Problem stellt aber die Neigung der Formmassen dar, beim Härtungsvorgang zu schwinden, was zu inneren Spannungen, zur Bildung von Einfallstellen, Verzugserscheinung und Oberflächenwelligkeit führt. Durch Zusatz bestimmter thermoplastischer Polymeren kann dieser Polymerisationsschwund reduziert werden.

Derartige Niederschrumpfungssysteme neigen jedoch häufig bei Lagerung, insbesondere während und nach der Eindickung, zu Phasenseparationen im Halbzeug, was schließlich Lunker und Poren im Formteil verursacht. Dies macht aufwendige Nacharbeiten zur Fehlerbeseitigung notwendig. Selbst wenn keine Fehlstellen dieser Art erkennbar sind, stören aber dennoch häufig Fleckenbildung und lokale Pigmentanreicherungen in der Formteiloberfläche als Folge von unerwünschten Phasenseparationen in den Formmassen.

Handelsübliche SMC-Harze sind meist auf Basis von Maleinsäure und Propylenglykol aufgebaut. Propylenglykol ist aber verhältnismäßig teuer. Beim Versuch, es durch das billigere Diethylenglykol zu ersetzen, stellt man fest, daß entsprechende SMC-Harze sehr stark zur Phasenseparation neigen. Diese Erscheinung kann zwar zurückgedrängt werden, wenn man einen Teil der Maleinsäurekomponente durch Phthalsäure ersetzt; dies führt aber dazu, daß dann ausgehärtete Formteile auf dieser Harzbasis keinen Glanz mehr aufweisen und infolge ihrer niedrigen Wärmeformbeständigkeit schlecht entformbar sind.

Bei der Eindickung von SMC-Harzen mit Magnesiumoxid oder -hydroxid findet eine Ionomerbildung statt, durch welche die Styrolverträglichkeit drastisch herabgesetzt wird. Um beim Eindickprozeß eine Phasenseparation zu verhindern, muß die Styrolverträglichkeit des Ausgangsharzes deshalb verhältnismäßig hoch sein, vorzugsweise größer als 5:1 und insbesondere von 10:1.

Ziel der Erfindung war also, ein SMC-Harz auf Basis des billigen Diethylenglykols mit ausreichend hoher Styrolverträglichkeit bereitzustellen, das zu Formteilen mit hohem Glanz ausgehärtet werden kann.

Es wurde gefunden, daß diese Aufgabe gelöst wird, wenn man in den ungesättigten Polyester Dicyclopentadien (DCPD)-Endgruppen einbaut.

Gegenstand der Erfindung sind demzufolge flächige bzw. teigige Formmassen auf Basis von glasfaserverstärkten, füllstoffhaltigen ungesättigten Polyesterharzen (SMC- bzw. BMC-Massen), enthaltend
A) 100 Gew.-Teile einer Mischung aus
   40 bis 70 Gew.-% eines ungesättigten Polyesters auf Basis von Maleinsäure, Diethylenglykol und Dicyclopentadien und
   60 bis 30 Gew.-% Styrol,
B) 3 bis 80 Gew.-Teile eines schrumpfmindernden thermoplastischen Polymeren,
C) 0,2 bis 5 Gew.-Teile eines Eindickmittels
D) 50 bis 380 Gew.-Teile Füllstoffe
E) 10 bis 200 Gew.-Teile Glasfasern
F) 0,2 bis 4 Gew.-Teile eines Radikalinitiators,
G) gegebenenfalls weitere übliche Zusatzstoffe,
wobei der ungesättigte Polyester folgende Bruttozusammensetzung hat:
Auf 1 Mol Maleinsäure- bzw. Fumarsäure-Einheiten kommen 0,75 bis 1 Mol Diethylenglykol-Einheiten und 0,2 bis 0,6 Mol Dicyclopentadien-Einheiten, wobei bis zu 30 Mol-% der Maleinsäure- bzw. Fumarsäure-Einheiten durch Einheiten anderer Dicarbonsäuren und bis zu 30 Mol-% der Diethylenglykol-Einheiten durch Einheiten anderer Diole ersetzt sein können, und wobei mindestens 75 % der Dicyclopentadien-Einheiten endständig sind.

Die EP-A 275 906 beschreibt ungesättigte Polyesterharze, die ein thermotropes Polymer, z.B. einen vollaromatischen Polyester enthalten. Als ungesättigte Polyester können auch Umsetzungsprodukte von Polyesterpräkondensaten und Dicylopentadien nach Diels-Alder eingesetzt werden. Bei dieser Umsetzung, die im allgemeinen bei Temperaturen oberhalb von 170°C durchgeführt wird, spaltet DCPD in zwei Moleküle Cyclopentadien auf, welches sich in einer Diels-Alder-Reaktion an die Maleinsäure-Doppelbindungen anlagert und Endomethylentetrahydrophthalsäure-Gruppen bildet. Dadurch wird aber die Glastemperatur des Polyesters abgesenkt, was zu schlechter Entformbarkeit beim Pressen und zu einer Verschlechterung der mechanischen Eigenschaften ausgehärteter Formteile führt.

In EP-A 501 176 und US-A 4.532.297 sind ungesättigte Polyesterharze auf Basis von Maleinsäureanhydrid, DCPD und Diolen beschrieben, die für SMC- und BMC-Massen geeignet sind. Wie aus den Beispielen zu ersehen ist, beträgt das Mol-Verhältnis Maleinsäureeinheiten : DCPD stets 1 : 1. Es hat sich gezeigt, daß Harze mit derart viel DCPD-Gruppen im Polyester-Molekül sehr schlecht eindicken.

Die US-A 4.525.427 betrifft Polyesterharze auf Basis von Maleinsäureanhydrid, DCPD und Diolen, die eine gute Haftung zu Metallen und Kunststoff aufweisen und zur Herstellung von Spachtelmassen geeignet sind. Spachtelmassen enthalten aber weder Glasfasern noch einen schrumpfmindernden Thermoplasten, sie werden auch nicht eingedickt. Da bei derartigen Massen Oberflächenqualität, Glanz und Styrolverträglichkeit keine Rolle spielen, konnte diese Druckschrift keine Hinweise für die Lösung der oben beschriebenen Aufgabe geben.

Zu den einzelnen Komponenten der Formmassen ist folgendes zu sagen:
A: Die ungesättigten Polyester werden durch Polykondensation von Maleinsäureanhydrid, Diethylenglykol und DCPD hergestellt. Dabei isomerieren die Doppelbindungen der Maleinsäure weitgehend von der cis- in die trans-Struktur, so daß der ungesättigte Polyester überwiegend Fumarsäure-Einheiten enthält. Die ungesättigten Polyester weisen vorzugsweise eine Säurezahl zwischen 10 und 40 auf (gemessen durch Titration des in Toluol/Ethanol gelösten ungesättigten Polyesters mit 0,1 n methanolischer KOH) und ein mittleres Molekulargewicht (Zahlenmittel) zwischen 500 und 3000 g/Mol, vorzugsweise von 1000 bis 2500 und insbesondere von 1500 bis 2000g/Mol. Die OH-Zahl sollte vorzugsweise zwischen 0 und 20 liegen.
   Für die Herstellung des ungesättigten DCPD-Polyesters gibt es mehrere Möglichkeiten.
   Bei einer ersten bevorzugten Ausführungsform wird zunächst ein Präkondensat aus Maleinsäureanhydrid und dem Diol hergestellt, wobei zweckmäßigerweise nur ein Teil der insgesamt benötigten Diolmenge eingesetzt wird, bevorzugt 40 bis 80 Gew.-%. Danach wird bei Temperaturen unterhalb von 160°C, vorzugsweise bei 130 bis 155°C das DCPD zugesetzt und schließlich das restliche Diol.
   Bei einer zweiten bevorzugten Ausführungsform wird zunächst Maleinsäureanhydrid mit Wasser hydrolysiert und die entstandene Maleinsäure wird mit DCPD teilweise zum entsprechenden Halbester umgesetzt. In einer zweiten Stufe wird dann die Mischung aus Halbester und Maleinsäure mit dem Diol zum Polyester mit DCPD-Endgruppen polykondensiert.
   In beiden Fällen findet eine weitgehende Umlagerung von Maleinsäure- in die Fumarsäure-Struktur statt.
   Bei der Herstellung des ungesättigten Polyesters ist darauf zu achten, daß die Mengenverhältnisse der Ausgangskomponenten so gewählt werden, daß folgende Zusammensetzung erhalten wird. Auf 1 Mol Maleinsäure- bzw. Fumarsäure-Einheiten kommen 0,75 bis 1, vorzugsweise 0,8 bis 0,9 Mol Diethylenglykol-Einheiten und 0,2 bis 0,6, vorzugsweise 0,35 bis 0,5 DCPD-Einheiten. Dabei können bis zu 30 Mol-%, vorzugsweise bis zu 15 Mol-% der Säure-Einheiten durch Einheiten anderer Dicarbonsäuren, z.B. Ortho-, Iso- und Terephthalsäure, Sebacinsäure oder Adipinsäure ersetzt sein, und bis zu 30 Mol-%, bevorzugt bis zu 15 Mol-% der Diethylenglykol-Einheiten kann durch Einheiten anderer Diole, z.B. Propylenglykol, Butandiol, Dipropylenglykol, Cyclohexandiol ersetzt sein. Bevorzugt ist der Ersatz durch bis zu 20 Mol-% Ethylenglykol. Schließlich sollen mindestens 75 %, vorzugsweise mindestens 80 % und insbesondere mindestens 90 % der DCPD-Einheiten endständig sein, wobei der Rest in Form von Endomethylentetrahydrophthalsäure-Gruppen in die Polyesterkette eingebaut ist.
   Der ungesättigte Polyester wird in Styrol gelöst. Bevorzugt wird dabei Styrol als alleiniges Comonomer eingesetzt. Es kann aber zu bis zu 40 Gew.-% durch andere übliche Comonomere, z.B. Vinyltoluol, α-Methylstyrol, Allylverbindungen oder (Meth-)Acrylate ersetzt sein.
B. Als Thermoplastkomponente kommen hochmolekulares Polyethylen, Polystyrol, Polymethylmethacrylat oder Polyvinylacetate in Frage, ferner gesättigte Polyester und Polyesterurethane in Mengen von 3 bis 80 Gew.-%, bezogen auf A. Bevorzugt sind feinteiliges Polyethylen niedriger Dichte in Mengen von 3 bis 10 Gew.-% und Polystyrol in Mengen von 5 bis 25 Gew.-%.
C. Die Formmasse enthält 0,2 bis 5 Gew.-%, bezogen auf A, eines üblichen Eindickmittels auf Basis einer basischen Metallverbindung. Bevorzugt sind dabei Oxide, Hydroxide, Alkoholate und Salze organischer Säuren von Metallen der 1. oder 3. Hauptgruppe, insbesondere MgO, Mg(OH)₂, CaO, Ca(OH)₂, BaO, Li₂O, LiOH, Mg- und Al-Alkoholate, Al-Ethylhexanoat und Al-benzoat. Geeignet sind auch einige Übergangsmetallverbindungen, wie z.B. ZnO.
D. Füllstoffe, wie Kreide, Quarz, Kaolin oder Aluminiumoxidhydrat sind in Mengen von 50 bis 380 Gew.-%, bezogen auf A, vorhanden.
E. Verstärkungsfasern sind in Mengen von 10 bis 200 Gew.-%, vorzugsweise von 20 bis 100 Gew.-%, bezogen auf A, vorhanden.
F. Für die Härtung werden vorzugsweise solche Peroxide eingesetzt, die bei 120 bis 180°C wirksam sind, z.B. tert.-Butylperoxid, tert.-Butylperbenzoat, tert.-Butylperethylhexanoat und 1,1-Di(tert.-butylperoxy)-3,3,5-trimethylcyclohexan.
G. Die erfindungsgemäße Formmasse kann ferner die üblichen Zusatzstoffe enthalten, wie z.B. interne Trennmittel, Inhibitoren und Beschleuniger.

Zur Herstellung von pigmentierten Formteilen werden den Formmassen Pigmentpasten zugesetzt, vorzugsweise solche auf Basis von ungesättigten Polyestern. Die Pigmentpasten können Styrol oder ein anderes reaktives Monomer enthalten; es sind aber auch monomerfreie Pigmentpasten geeignet.

Ein bevorzugtes Verfahren zur Herstellung der erfindungsgemäßen Formmassen besteht darin, daß man die Komponenten A, B, D, E, F und G (mit Ausnahme von langen Verstärkungsfasern) vermischt, bei Temperaturen unterhalb von 50°C die Komponente C zusetzt und dadurch die Eindickung einleitet, gegebenenfalls die noch fließfähige Masse auf Verstärkungsfasern aufbringt und dann die Eindickung zu Ende führt. Zur Beschleunigung der Eindickung kann es in manchen Fällen zweckmäßig sein, die Masse kurzzeitig auf Temperaturen unterhalb von 50°C zu erwärmen. Die vollständige Eindickung der Masse ist in wenigen Tagen praktisch beendet.

Die eingedickten Massen können ohne Phasentrennung längere Zeit bis zur Verarbeitung gelagert werden, wobei sie z.B. aufgewickelt gestapelt oder auch verpackt werden können. Zur Verarbeitung der Formmassen kommen das Pressen, Spritzpressen, Spritzgießen und Tiefziehen in Frage, wobei die Härtung bei Temperaturen oberhalb von 50°C, vorzugsweise zwischen 80 und 200°C und insbesondere zwischen 120 und 180°C durchgeführt wird.

Die gehärteten Formteile können in der Bau-, Elektro- und Automobilindustrie verwendet werden. Besonders vorteilhaft werden daraus Kellerschächte, Dachrinnen, Schaltkästen, Fassadenplatten, Multifunktionsbauteile, Motorkapseln und Lampengehäuse hergestellt.

Die in den Beispielen genannten Teile und Prozente beziehen sich auf das Gewicht.

### Beispiel 1

Entsprechend der ersten Ausführungsform wurde ein mit 100 ppm Tolu-Hydrochinon stabilisiertes Präkondensat aus Maleinsäureanhydrid und Diethylenglykol im Mol-Verhältnis 1:0,5 bei 130°C hergestellt. Bei 155°C wurden 0,4 Mol Dicyclopentadien, bezogen auf 1 Mol Maleinsäureanhydrid, zugegeben und 1 h nachgerührt. Bei 130°C wurden dann 0,34 Mol Diethylenglykol, bezogen auf 1 Mol Maleinsäureanhydrid, zugegeben. Die Mischung wurde bei 200°C bis zu einer Viskosität von 610 mPas (Plattenkonus; 150°C) kondensiert, mit Styrol abgemischt und mit weiteren 50 ppm Tolu-Hydrochinon stabilisiert. Das Harz wies dann folgende Kennzahlen auf: Säurezahl = 20 mg KOH/g Harz; Festgehalt = 66 %; Viskosität 1380 mPas (Becherviskosimeter; 23°C).

Für eine SMF-Formulierung wurden 100 Teile Harz mit 5 Teilen Polyethylenpulver, 170 Teilen Calciumcarbonat, 28 Teilen Glasfasern, 3 Teilen Zinkstearat als Trennmittel, 1 Teil tert.-Butylperbenzoat und 100 ppm p-Benzochinon vermischt und zuletzt 3,5 Teile Magnesiumoxidpaste (35 %ig) zugesetzt. Aus der Masse wurde ein flächiger Prepreg hergestellt, der nach 3 Tagen bei Raumtemperatur eingedickt war. Ein Probekörper wurde bei 150°C 3 min verpreßt, wobei ein glänzendes Preßteil erhalten wurde.

### Beispiel 2

Entsprechend der zweiten Ausführungsform wurden 0,45 Mol Wasser bei 100°C zu einer Mischung von 1 Mol Maleinsäureanhydrid und 0,4 Mol Dicyclopentadien, stabilisiert durch 100 ppm Tolu-Hydrochinon, gegeben. Nach einer Stunde bei 140°C wurden 0,84 Mol Diethylenglykol zugegeben und dann bei 200°C bis zu einer Viskosität von 590 mPas (Plattenkonus; 150°C) kondensiert, mit Styrol abgemischt und mit zusätzlichen 50 ppm Tolu-Hydrochinon stabilisiert. Das Herz wies folgende Kennzahlen auf: Säurezahl = 23 mg KOH/g Harz; Festgehalt 65 %; Viskosität 1175 mPas (Becherviskosimeter, 23°C). Beim Verpressen eines wie in Beispiel 1 hergestellten Probekörpers wurde wieder ein glänzendes Preßteil erhalten.

### Vergleichsbeispiel 1

Analog der Herstellung von Harz 3 in EP 501 176, entsprechend der hier beschriebenen Ausführungsform 2, wurde ein Harz der Zusammensetzung ein Mol Maleinsäureanhydrid, ein Mol Dicyclopentadien und 0,55 Mol Diethylenglykol mit einer Viskosität von 5120 mPas (Plattenkonus; 100°C) kondensiert, mit Styrol abgemischt und mit 100 ppm hydrochinon stabilisiert. Ein dergestalt erhaltenes Harz wies folgende Kennzahlen auf: Säurezahl = 15 mg KOH/g Harz; Viskosität 375 mPas (Becherviskosimeter: 23°C). In einem Eindicktest wurden 100 Teile Harz mit 180 Teilen Calciumcarbonat und 2 Teilen Magnesiumoxidpaste versetzt. Nach 7 Tagen wurde nur eine Pastenviskosität von 28 Pas erhalten. Das Harz dickt also nicht ein. Im Vergleich dazu ergab der gleiche Eindicktest beim Beispiel 1 nach 7 Tagen eine Pastenviskosität von 124.000 Pas.

### Vergleichsbeispiel 2

Analog Beispiel UP1 in EP-A 275 906 wurde ein Harz im Molverhältnis Maleinsäureanhydrid zu Diethylenglykol zu Ethylenglykol zu Dicyclopentadien von 1:0,84 : 0,21 : 0,32 mit einer Viskosität von 500 mPas (Plattenkonus; 150°C) hergestellt und mit Styrol auf einen Festgehalt von 62 % eingestellt. Entsprechend UP1 von EP-A 275 906 wies das Harz eine Säurezahl von 12 mg KOH/g Harz und eine Viskosität von 580 mPas (Becherviskosimeter: 23°C) auf. Wie in Beispiel 1 wurde daraus eine SMC-Formulierung und ein Prepreg hergestellt. Beim Verpressen eines Probekörpers daraus wurde ein sehr mattes Teil erhalten, das zudem eine deutlich unruhigere Oberfläche und stärkere Einfallstellen über Stegen als in Beispiel 1.

## Patentansprüche

1. Flächige bzw. teigige Formmassen auf Basis von glasfaserverstärkten, füllstoffhaltigen ungesättigten Polyesterharzen (SMC- bzw. BMC-Massen), enthaltend
A) 100 Gew.-Teile einer Mischung aus
40 bis 70 Gew.-% eines ungesättigten Polyesters auf Basis von Maleinsäure, Diethylenglykol und Dicyclopentadien und
60 bis 30 Gew.-% Styrol,
B) 3 bis 80 Gew.-Teile eines schrumpfmindernden thermoplastischen Polymeren,
C) 0,2 bis 5 Gew.-Teile eines Eindickmittels
D) 50 bis 380 Gew.-Teile Füllstoffe
E) 10 bis 200 Gew.-Teile Glasfasern
F) 0,2 bis 4 Gew.-Teile eines Radikalinitiators,
G) gegebenenfalls weitere übliche Zusatzstoffe,
dadurch gekennzeichnet, daß der ungesättigte Polyester folgende Bruttozusammensetzung hat:
Auf 1 Mol Maleinsäure- bzw. Fumarsäure-Einheiten kommen 0,75 bis 1 Mol Diethylenglykol-Einheiten und 0,2 bis 0,6 Mol Dicyclopentadien-Einheiten, wobei bis zu 30 Mol-% der Maleinsäure- bzw. Fumarsäure-Einheiten durch Einheiten anderer Dicarbonsäuren und bis zu 30 Mol-% der Diethylenglykol-Einheiten durch Einheiten anderer Diole ersetzt sein können, und wobei mindestens 75 % der Dicyclopentadien-Einheiten endständig sind.

2. Formmassen nach Anspruch 1, dadurch gekennzeichnet, daß bis zu 20 Mol-% der Diethylenglykoleinheiten durch Ethylenglykol ersetzt sind.

3. Formmassen nach Anspruch 1, dadurch gekennzeichnet, daß sie als Komponente B 3 bis 10 Gew.-% eines feinteiligen Polyethylens niedriger Dichte enthält

4. Verwendung der Formmassen nach Anspruch 1 zur Herstellung von Formteilen für die Bau-, Elektro- und Automobilindustrie.
